# EUROPÄISCHE PATENTANMELDUNG

(11) **EP 0 903 380 A1**
(43) Veröffentlichungstag der Anmeldung: **24.03.1999**
(21) Anmeldenummer: 98117012.9
(22) Anmeldetag: 09.09.1998
(51) Int. Cl.: C09D 7/04, C09D 7/12, C08K 5/09, C08K 5/10

(54) **Neue Additive zur Vermeidung von Hautbildung an lufttrocknenden Lacken**

(30) Priorität: 22.09.1997 DE 19741644
(71) Anmelder: Borchers GmbH, 40789 Monheim (DE)
(72) Erfinder: Link, Günter, 38644 Goslar (DE); Edelmann, Dirk, Dr., 42277 Wuppertal (DE)
(74) Vertreter: Steiling, Lothar, Dr.

(57) **Zusammenfassung**

Die Erfindung betrifft oxidativ trocknende Lacke und neue Additive, welche geeignet sind, unerwünschte Hautbildung zu vermeiden und die Durchtrocknung von Lackfilmen zu verbessern.

Diese Additive sind gekennzeichnet durch die Anwesenheit von Oxocarbonsäuren bzw. deren Derivate und/oder weiteren Dioxoverbindungen.

## Beschreibung

Die Erfindung betrifft oxidativ trocknende Lacke und neue Additive, welche geeignet sind, unerwünschte Hautbildung zu vermeiden und die Durchtrocknung von Lackfilmen zu verbessern.

Diese Additive sind gekennzeichnet durch die Anwesenheit von Oxocarbonsäuren bzw. deren Derivate und/oder weiteren Dioxoverbindungen.

Die Beschreibung liegt auf dem Gebiet der farblosen und pigmentierten Lacke auf Basis oxidativ trocknender Öle, Alkydharze, Epoxyester und anderer oxidativ trocknender, veredelter Öle. Sie betrifft neue Additive, die in der Lage sind, die Hautbildung in o.g. Lacksystemen zu verhindern. Sie betrifft aber auch Additive, welche die Durchtrocknung, Verlauf und Glanz o.g. Lacksysteme verbessern.

Öle und Bindemittel, die durch die Einwirkung von Sauerstoff (vorzugsweise aus der Luft) bei Raumtemperatur oder bei höheren Temperaturen mittels Zusatz von Trokkenstoffen, z.B. Metallseifen von Übergangsmetallen (die Lösungen von Trockenstoffen bezeichnet man als 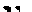 Sikkative"), oxidativ vernetzen und so von der flüssigen Phase in die feste übergehen, können bei der Lagerung (in offenen oder geschlossenen Gefäßen) an ihrer Oberfläche eine Haut bilden. Diese noch vor der eigentlichen Applikation des Lackes stattfindende Vernetzung ist in hohem Maße unerwünscht, da sie z.B. die Handhabung des Lackes erschweren und sehr häufig die gleichmäßige Verteilung der Sikkative verhindern. Eine Ursache der Hautbildung ist die Anreicherung von bestimmten Sikkativen an der Oberfläche. Durch Einbau der Sikkative in die Lack-Haut werden dem darunterliegenden Rest des Lackes die notwendigen aktiven Sikkative entzogen, so daß es zu starken Trocknungsverzögerungen kommt.

Hautbildung ist gleichermaßen beim applizierten Lackfilm unerwünscht und nachteilig. Eine zu schnelle Trocknung an der Lackoberfläche verhindert die gleichmäßige Durchtrocknung des Filmes durch die Abschirmung der unteren Filmschichten vom trocknungsnotwendigen Sauerstoff welcher sich durch zu schnelle Oberflächentrocknung nicht gleichmäßig verteilen kann. Daraus resultieren für den Lackfilm Verlaufsstörungen, wie z.B. das Schrumpfen oder auch Haftungsprobleme bzw. insgesamt nicht ausreichend harte Filme.

Es ist daher notwendig und Stand der Technik, dem Lack Substanzen zuzugeben, welche die Reaktion mit Luftsauerstoff an der (Lack)-Flüssigkeitsoberfläche, also im Gefäß und beim aufgetragenen Film hemmen (Antioxidantien). Eine Auflistung solcher bekannter Verbindungen findet sich z.B. in H. Kittel; Lehrbuch der Lacke und Beschichtung; Colomb Verlag; 1976.

Die wichtigsten Verbindungsklassen sind zum einen phenolische Verbindungen und zum anderen Oxime. Die phenolischen Hautverhinderer weisen jedoch eine deutliche Antrocknungsverzögerung auf, so daß sie alleine nur noch für spezielle Lackformulierungen in Frage kommen. Oxime, wie z.B. das Methylethylketoxim, zeigen hingegen aufgrund ihrer Flüchtigkeit nur eine leichte Antrocknungsverzögerung. Der Nachteil der heute in großem Umfange eingesetzten Oxime liegt in ihrer Toxizität. So wurden in einer Tierversuchsstudie Hinweise auf eine Krebsbildungsgefahr bei Exposition durch Einatmen gefunden (MAK-Liste 1997). Dies bedeutet aufwendige persönliche Schutzmaßnahmen bei der Verarbeitung von Lacken, die Oxime als Hautverhinderungsmittel enthalten.

Es war somit Aufgabe der vorliegenden Erfindung, Antioxidantien (Hautverhinderungsmittel) bereitzustellen, die keine (oder nur eine sehr geringe) Antrocknungsverzögerung zeigen, eine sehr gute Durchtrocknung des Lackes bewirken und keine nachteiligen toxikologischen Eigenschaften besitzen.

Eine weitere Aufgabe der vorliegenden Anmeldung war es, Hautverhinderungsmittel zu liefern, die in möglichst vielen, verschiedenen Arten oxidativ trocknender Lacke einarbeitbar sind. Ebenso war es eine Aufgabe, Additive zu erzeugen, die aufgrund ihrer physikalischen Eigenschaften unproblematisch in entsprechende Lackformulierungen einsetzbar sind.

Diese Aufgabe wird überraschend gelöst durch Verbindungen der allgemeinen Formel (I), Gemische derselben mit Produkten der allgemeinen Formel (II) und Gemische von Verbindungen der allgemeinen Formel (I) mit solchen der allgemeinen Formel (III). Ebenfalls gelöst wird die Aufgabe der vorliegenden Erfindung von einem Gemisch von Verbindungen der Formeln (I), (II) und (III). 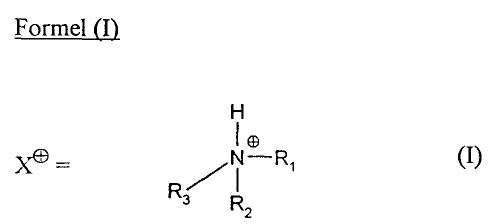
- R₁ =: H, Alkylrest C₁-C₁₀, Aryl-Rest oder Cycloalkylrest mit C₅-C₇
- R₂ ≙: R₁
- R₃ ≙: R X

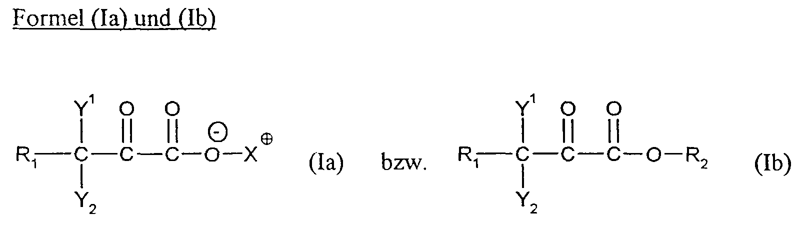

- Y =: H, F, Cl mit Y¹ gleich oder ungleich Y²
- R₁=: H, Alkylrest C₁-C₁₀, Aryl-Rest oder Cycloalkylrest mit C₅-C₇
- R₂ =: H, Alkylrest C₁-C₁₀, Aryl-Rest oder Cycloalkylrest mit C₅-C₇ R₁ und R₂ können gleich oder ungleich sein
- X: Die organischen Reste R₁, R₂ und R₃ können zusätzlich funktionelle Gruppen wie z.B. HO-Gruppen enthalten. R₁, R₂ und R₃ können gleich oder ungleich sein.

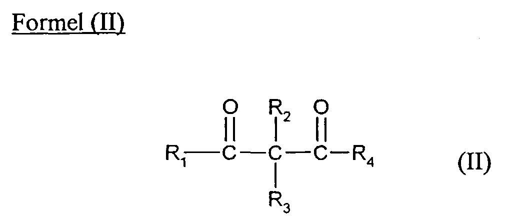

- R₁=: Alkylrest C₁-C₄, Aryl-Rest oder Cycloalkylrest mit C₅-C₇
- R₂ =: H, Alkylrest C₁-C₄
- R₃ =: H, Alkylrest C₁-C₄ R₂ und R₃ können gleich oder ungleich sein
- R₄=: Alkylrest C₁-C₄, Aryl-Rest oder Cycloalkylrest mit C₅-C₇

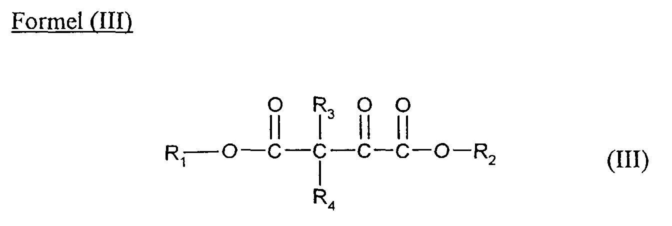

- R₁=: H, Alkylrest C₁-C₄, Aryl-Rest oder Cycloalkylrest mit C₅-C₇
- R₂ =: H, Alkylrest C₁-C₄, Aryl-Rest oder Cycloalkylrest mit C₅-C₇ R₁ und R₂ können gleich oder ungleich sein
- R₃ =: H, Alkylrest C₁-C₄, Aryl-Rest oder Cycloalkylrest mit C₅-C₇
- R₄=: H, Alkylrest C₁-C₄, Aryl-Rest oder Cycloalkylrest mit C₅-C₇ R₃ und R₄ können gleich oder ungleich sein

Es ist erfindungswesentlich, daß als Hautverhinderungsmittel nur Gemische eingesetzt werden, die mindestens 1 Gew.-% einer Verbindung der allgemeinen Formel (I) enthalten. Verbindungen der allgemeinen Formel (III) werden erfindungsgemäß nur zusammen mit solchen der Formel (I) eingesetzt.

Ebenfalls erfindungsgemäß im Sinne der vorliegenden Anmeldung ist der Einsatz von Verbindungen der allgemeinen Formel (I) alleine oder in Form von Lösungen in organischen Lösemitteln. Hierbei sind alle üblichen Lösungsmittel, z.B. Aromaten, Testbenzine, Ketone und Alkohol möglich. Bevorzugt ist aber eine Mischung mit Verbindungen der Formeln (II) und/oder (III).

Ein weiterer Gegenstand der vorliegenden Anmeldung ist die Verwendung der beschriebenen Verbindungen als Hautverhinderungsadditive in oxidativ trocknenden Lacken. Für die Anwendung können die neuen Hautverhinderungsmittel der allgemeinen Formel (I) sowohl alleine als auch in beliebiger Anmischung miteinander und bevorzugt in Mischungen mit Verbindungen der Formeln (I) und/oder (III) verwendet werden.

Die Verbindungen bzw. deren Gemische können pur oder in Form von Lösungen in organischen Lösungsmitteln oder auch in Form einer wäßrigen Dispersion bzw. Emulsion verwendet werden, wobei wäßrig in diesem Zusammenhang bedeuten soll, daß Wasser entweder alleiniges Lösemittel ist oder zu über 50 Gew.-%, bezogen auf die Lösemittelmischung neben üblichen organischen Lösemitteln zugegeben ist.

Die Einsatzmenge der neuen Additive richtet sich in erster Linie nach der Menge der verwendeten Sikkative in der Lackformulierung. In der Regel sollten je Mol eingesetzten Metalles des Primärtrockners bzw. der Primärtrockner bei Verwendung von sogenannten Kombinationstrocknern ca. 1 bis 6 Mol von Verbindungen der Formel (I) zugegeben werden. Vorzugsweise werden zusätzlich 1 bis 6 Mol von Verbindunngen der Formeln (II) bzw. (III) beigefügt. Die besonderen bevorzugten Einsatzmengen richten sich aber auch stark nach der Art des Bindemittels und der eingesetzten Pigmente. So sind besonders bevorzugte Einsatzmengen für unpigmentierte Lacke auf Basis langöliger Alkydharze, z.B. 1,5 bis 3 Mol einer Verbindung der Formel (I) in einem Gemisch mit 3 bis 6 Mol einer Verbindung der Formel (II) bezogen auf die eingesetzten Metallmenge an Primärtrockner. In speziellen Systemen kann die einzusetzende relative Additivmenge auch größer als 6 Mol eines erfindungsgemäßen Gemisches (bezogen auf die Metallmenge des Sikkatives) der neuen Hautverhinderungsmittel sein.

Es ist ein Vorteil der in dieser Anmeldung beschriebenen Hautverhinderungsmittel, daß sie in einer sehr breiten Palette an Bindemitteln und bei Einsatz verschiedener Sikkative stets zuverlässig die Hautbildung verhindern, aber andere Trocknungseigenschaften des Lackes nicht nachteilig beeinflussen.

So können im Gegenteil in einigen Bindemittelsystemen, insbesondere durch Einsatz von Verbindungen der allgemeinen Formel (III), die An- und Durchtrocknung des Lackes deutlich verbesset werden.

### Beispiele

### 1.) Ausführungsformen

Als die Erfindung erläuternde, aber nicht einschränkende Beispiele sollen zunächst folgende Ausführungsformen der erfindungsgemäßen Zusammensetzung der Gemische geeigneter Hautverhinderungsmittel genannt werden.
a) 100 Gew.-% 2-Oxopropionsäure
b) 50 Gew.-% 2-Oxopropionsäure; 45 Gew.-% Testbenzin K60; 5 Gew.-% n-Butanol
c) 50 Gew.-% 2-Oxobuttersäure; 45 Gew.-% Testbenzin K60; 5 Gew.-% n-Butanol
d) 50 Gew.-% 2-Oxovaleriansäure; 45 Gew.-% Testbenzin K60; 5 Gew.-% n-Butanol
e) 22,6 Gew.-% 2-Oxopropionsäure; 77,4 % 2,4-Pentadion
f) 12,8 Gew.-% 2-Oxopropionsäure; 87,2 % 2,4-Pentadion
g) 30,3 Gew.-% 2-Oxopropionsäure; 69,7 Gew.-% 2-Methyl-3-oxo-bernsteinsäure-diethylester
h) 39,5 Gew.-% 2-Oxopropionsäure; 60,5 Gew.-% 2-Methyl-3-oxo-bernsteinsäure-diethylester
i) 46,5 Gew.-% 2-Oxopropionsäure; 53,5 Gew.-% 2-Methyl-3-oxo-bernsteinsäure-diethylester
j) 12,3 Gew.-% 2-Oxopropionsäure; 57,5 % 2,4-Pentadion; 30,2 Gew.-% 2-Methyl-3-oxo-bernsteinsäure-diethylester
k) 50,0 Gew.-% 2-Oxopropionsäure-N,N-dimethyl-N-2-hydroxylammoniumsalz; 50 Gew.-% 2,4-Pentadion

### 2) Anwendungsbeispiele der erfindungsgemäßen Hautverhinderungsmittel

a) Zu 40,0 g eines kurzöligen Alkydharzes (Alkydal F26X® der Fa. Bayer), versetzt mit 3,6 g Xylol, 1,0 g n-Butanol und 5,2 g Testbenzin K60, sikkativiert mit 0,200 g Trockner 69 (Fa. Borchers; enthält 6 Gew.-% Co) wurden 0,099 g des in 1e) aufgeführten Gemisches gegeben. In einem offenen Reagenzglas (160 x 16 mm; 5,0 Einwaage) wurde die Hautbildung mehr als 20 Tage verhindert. Die Trocknungszeit eines entsprechenden Lackfilmes (100 µm Naßfilmdicke) betrug 2,0 h (bestimmt in Anlehnung an DIN 53 150). Im Vergleich dazu betrug die Hautbildungszeit ohne Zugabe des Hautverhinderungsadditives, gemessen unter identischen Bedingungen, 4 Tage. Die Trocknungszeit, gemessen unter identischen Bedingungen ohne Zugabe eines Hautverhinderungsmittels, betrug 5 h.
b) Zu 40,0 g eines kurzöligen Alkydharzes (Alkydal F26X® der Fa. Bayer), versetzt mit 3,6 g Xylol, 1,0 g n-Butanol und 5,2 g Testbenzin K60, sikkativiert mit 0,200 g Trockner 69 (Fa. Borchers; enthält 6 Gew.-% Co) wurden 0,100 g eines Gemisches der Zusammensetzung wie in 1h) beschrieben gegeben. In einem offenen Reagenzglas (160 x 16 mm; 5,0 Einwaage) wurde die Hautbildung mehr als 17 Tage verhindert. Im Vergleich dazu betrug die Hautbildungszeit ohne Zugabe des Additives 4 Tage. Die Trocknungszeit eines entsprechenden Lackfilmes (100 µm Naßfilmdicke) betrug 5 h (bestimmt in Anlehnung an DIN 53 150).Die Pendelhärte nach König (bestimmt nach DIN 53 150) des o.g. Filmes betrug nach 48 h 105 s und nach 72 h 143 s. Im Vergleich dazu betrug die Pendelhärte, bestimmt unter identischen Bedingungen, eines Lackfilmes ohne Hautverhinderungsadditiv nach 48 h 74 s und nach 72 h 80 s.
c) Zu 40,0 g eines mittelöligen Alkydharzes (Alkydal F48TB® der Fa. Bayer), versetzt mit 3,6 g Xylol, 1,0 g n-Butanol und 5,2 g Testbenzin K60, sikkativiert mit 0,185 g Trockner 69 (Fa. Borchers; enthält 6 Gew.-% Co) wurden 0,120 g eines Gemisches der Zusammensetzung wie in 1g) beschrieben gegeben. In einem Reagenzglas (160 x 16 mm; 5,0 Einwaage) wurde die Hautbildung mehr als 17 Tage verhindert. Im Vergleich dazu betrug die Hautbildungszeit des Lackansatzes ohne Hautverhinderungsmittel 2 Tage. Die Trocknungszeit eines entsprechenden Lackfilmes (100 µm Naßfilmdicke) wurde zu 4 h bestimmt (gemessen in Anlehnung an DIN 53 150). Die Trocknungszeit eines Lackfilmes ohne Hautverhinderungsadditiv betrug unter identischen Bedingungen ebenfalls 4 h. Die Pendelhärte nach König (bestimmt nach DIN 53 170) des Lackfilmes mit dem o.g. Additiv zeigte Werte von 75 s nach 48 h Trocknungszeit und 94 s nach 72 h. Die Pendelhärte, bestimmt unter identischen Bedingungen, des Filmes ohne zugegebenem Additiv betrug nach 48 h Trocknungszeit 67 s und nach 72 h Trocknungszeit 67 s.
d) Zu 40,0 g eines mittelöligen Alkydharzes (Alkydal F48TB® der Fa. Bayer), versetzt mit 3,6 g Xylol, 1,0 g n-Butanol und 5,2 g Testbenzin K60, sikkativiert mit 0,185 g Trockner 69 (Fa. Borchers; enthält 6 Gew.-% Co) wurden 0,093 g eines Gemisches der Zusammensetzung wie in 1f) beschrieben gegeben. In einem offenen Reagenzglas (160 x 16 mm; 5,0 Einwaage) wurde die Hautbildung mehr als 15 Tage verhindert. Die Trocknungszeit eines entsprechenden Lackfilmes (100 µm Naßfilmdicke) wurde zu 5 h bestimmt (gemessen in Anlehnung an DIN 53 150).Die Pendelhärte nach König (bestimmt nach DIN 53 150) des Lackfilmes mit dem o.g. Additiv ergab Werte von 43 s und nach 24 h Trocknungszeit, 68 s und nach 48 h und 89 s nach 72 h Trocknungszeit, was, verglichen mit den Werten des Lackfilmes ohne Additiv (Beispiel c) eine Verbesserung der Durchtrocknung anzeigt.
e) Zu 40,0 g eines langöligen Alkydharzes (Alkydal F681TB® der Fa. Bayer), versetzt mit 3,6 g Xylol, 1,0 g n-Butanol und 5,3 g Testbenzin K60, sikkativiert mit 0,125 g Trockner 69 (Fa. Borchers; enthält 6 Gew.-% Co) und 0,64 g Octa-Soligen Ca-10® (Fa. Borchers; enthält 10 Gew.-% Ca) wurden 0,075 g eines Gemisches der Zusammensetzung wie in 1e) beschrieben gegeben. In einem offenen Reagenzglas (160 x 16 mm; 5,0 Einwaage) wurde die Hautbildung mehr als 20 Tage verhindert. Im Vergleich dazu beträgt die Hautbildungszeit des Lackansatzes ohne Hautverhinderungsmittel 3 Tage. Die Trocknungszeit eines entsprechenden Lackfilmes (100 µm Naßfilmdicke) mit Hautverhinderungsadditiv, beschrieben in 1e) betrug 9 h (gemessen in Anlehnung an DIN 53 150). Die Trocknungszeit eines entsprechenden Lackfilmes ohne das o.g. Additiv betrug unter identischen Bedingungen 8 h.
f) Zu 40,0 g eines langöligen Alkydharzes (Alkydal F681TB® der Fa. Bayer), versetzt mit 4,6 g Xylol, 1,0 g n-Butanol und 4,0 g Testbenzin K60, sikkativiert mit 0,10 g Octa-Soligen CO-6® und 0,30 g Octa-Soligen CO10® (Fa. Borchers) zwischen 0,16 g eines Gemisches der Zusammensetzung wie in 1k) beschrieben gegeben. In einem offenen Reagenzglas (160 x 16 mm) wurden 5,0 des Lackansatzes eingewogen. Die Hautbildung mehr als 21 Tage verhindert. Im Vergleich dazu beträgt die Hautbildungszeit des Lackansatzes ohne Hautverhinderungsadditiv 3 Tage. Die Trocknungszeit, gemessen mit einem Nadelspurgerät (Drying Recorder) betrug als Lackfilm (100 µm Naßfilmdicke) mit Hautverhinderungsadditiv, beschrieben in 1k) 5,0 h Die Trocknungszeit ohne entsprechenden Hautverhinderungsadditiv betrug ebenfalls 5,0 h.
g) Zu 30,0 g eines langöligen Alkydharzes (Alkydal F681TB® der Fa. Bayer), wurden 14,0 g CaCO₃ und 20,0 g Zinkweiß (Zinkoxid), sowie 3,0 g Xylol, 1,0 g n-Butanol, 0,35 g Borchigen ND (Fa. Borchers) und 5,0 g Testbenzin K60 gegeben. Dieser Lackansatz wurde mit 0,15 g Trockner 69 (Fa. Borchers; enthält 6 Gew.-% Co) und 0,50 g Octa-Soligen Ca-10® (Fa. Borchers; enthält 10 Gew.-% Ca) sikkativiert und mit 0,077 g eines Gemisches beschrieben in 1e), versetzt. Die Hautbildung in einem offenen Reagenzglas (160 x 16 mm; 5,0 Einwaage) wurde die Hautbildung mehr als 17 Tage verhindert. Die Hautbildungszeit des Ansatzes ohne Hautverhinderungsadditiv betrug unter identischen Bedingungen 1 Tag. Die Trocknungszeit eines entsprechenden Lackfilmes (100 µm Naßfilmdicke) wurde zu 4 H bestimmt (gemessen in Anlehnung an DIN 53 150). Die Trocknungszeit eines Lackfilmes ohne Hautverhinderungsmittel betrug unter identischen Bedingungen 3,5 h. Die Pendelhärte nach König (bestimmt nach DIN 53 170) des Lackfilmes mit dem o.g. Hautverhinderungsadditiv zeigte Werte von 35 s nach 24 h Trocknungszeit, 48 s nach 49 h und 64 s nach 72 h Trocknungszeit, verglichen mit 32 s nach 24 h, 46 s nach 49 h und 55 s nach 72 h Trocknungszeit für den Lackfilm ohne Hautverhinderungsadditiv, gemessen unter identischen Bedingungen.

## Patentansprüche

1. Antioxidans für oxidativ trocknende Lacke der allgemeinen Formel (I) 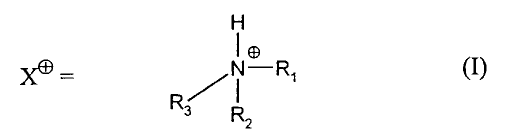
R₁ = H, Alkylrest C₁-C₁₀ linear oder verzweigten Aryl-Rest oder Cycloalkylrest mit C₅-C₇ R₁, R₂ und R₃ können gleich oder ungleich sein
R₂ ≙ R₁
R₃ ≙ R X 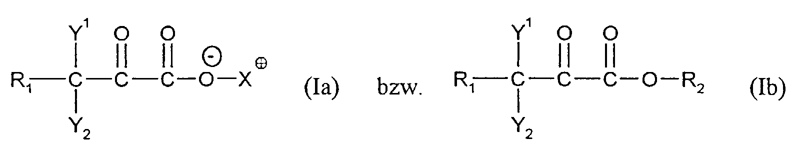
Y = H, F, Cl mit Y¹ gleich oder ungleich Y²
R₁= H, Alkylrest C₁-C₁₀, Aryl-Rest oder Cycloalkylrest mit C₅-C₇
R₂ = H, Alkylrest C₁-C₁₀, Aryl-Rest oder Cycloalkylrest mit C₅-C₇ R₁ und R₂ können gleich oder ungleich sein
X Die organischen Reste R₁, R₂ und R₃ können zusätzlich funktionelle Gruppen wie z.B. HO-Gruppen enthalten. R₁, R₂ und R₃ können gleich oder ungleich sein.

2. Antioxidans der allgemeinen Formel (I) in Gemischen mit Verbindungen der Formel (II) 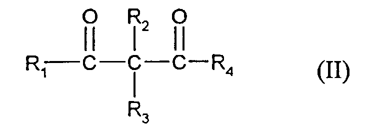
R₁= Alkylrest C₁-C₄, Aryl-Rest oder Cycloalkylrest mit C₅-C₇
R₂ = H, Alkylrest C₁-C₄
R₃ = H, Alkylrest C₁-C₄ R₂ und R₃ können gleich oder ungleich sein
R₄= Alkylrest C₁-C₄, Aryl-Rest oder Cycloalkylrest mit C₅-C₇

3. Antioxidans der allgemeinen Formel (I) in Gemischen mit Verbindungen der allgemeinen Formel (III) 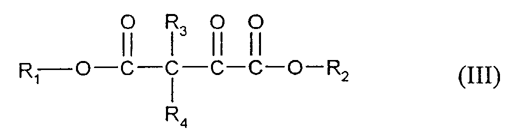
R₁= H, Alkylrest C₁-C₄, Aryl-Rest oder Cycloalkylrest mit C₅-C₇
R₂ = H, Alkylrest C₁-C₄, Aryl-Rest oder Cycloalkylrest mit C₅-C₇ R₁ und R₂ können gleich oder ungleich sein
R₃ = H, Alkylrest C₁-C₄, Aryl-Rest oder Cycloalkylrest mit C₅-C₇
R₄= H, Alkylrest C₁-C₄, Aryl-Rest oder Cycloalkylrest mit C₅-C₇ R₃ und R₄ können gleich oder ungleich sein

4. Antioxidans der allgemeinen Formel (I) in Gemischen mit Verbindungen der allgemeinen Formeln (II) und (III).

5. Antioxidans nach Anspruch 1 bis 4, dadurch gekennzeichnet, daß sie in organischen Lösemitteln gelöst sind.

6. Verwendung der Antioxidans gemäß Anspruch 1 bis 5 als Additive in pigmentierten Systemen oder Klarlacken auf Basis oxidativ trocknender Bindemittel als Hautverhinderungsmittel in Einsatzmengen von 0,05 bis 1 Gew.-%, bezogen auf den Gesamtansatz.

7. Verwendung nach Anspruch 6, dadurch gekennzeichnet, daß die Additive zur Verbesserung der Durchtrocknung des Verlaufes und des Glanzes von oxidativ trocknenden Lacksystemen verwendet werden.
